(19) Europäisches Patentamt / European Patent Office / Office européen des brevets

(11) **EP 3 244 703 B1**

(12) **EUROPÄISCHE PATENTSCHRIFT**

(45) Veröffentlichungstag und Bekanntmachung des Hinweises auf die Patenterteilung:
**25.12.2019  Patentblatt 2019/52**

(51) Int Cl.:
***H05B 37/02*** *(2006.01)*

(21) Anmeldenummer: **17166635.7**

(22) Anmeldetag: **13.04.2017**

(54) **VERFAHREN ZUR HELLIGKEITSREGELUNG VON INNENRAUMBELEUCHTUNGSMITTELN SOWIE BELEUCHTUNGSREGELSYSTEM**

METHOD FOR CONTROLLING THE BRIGHTNESS OF INTERIOR LIGHTING AND LIGHTING CONTROL SYSTEM

PROCÉDÉ DE RÉGLAGE DE LUMINOSITÉ DES MOYENS D'ÉCLAIRAGE DE L'HABITACLE ET SYSTÈME DE RÉGLAGE D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2016   DE 102016108853**

(43) Veröffentlichungstag der Anmeldung:
**15.11.2017   Patentblatt 2017/46**

(73) Patentinhaber: **STEINEL GmbH
33442 Herzebrock (DE)**

(72) Erfinder:
• **STEINEL, Ingo H.
33442 Herzebrock-Clarholz (DE)**
• **Eisele, Thomas
52159 Roetgen-Rott (DE)**

(74) Vertreter: **Müller Hoffmann & Partner
Patentanwälte mbB
St.-Martin-Strasse 58
81541 München (DE)**

(56) Entgegenhaltungen:
**DE-A1-102008 036 992**

EP 3 244 703 B1

**Beschreibung**

Die vorliegende Erfindung betrifft ein Verfahren zur Helligkeitsregelung von Innenraumbeleuchtungsmitteln nach dem Oberbegriff des Hauptanspruchs. Ferner betrifft die vorliegende Erfindung ein Beleuchtungsregelsystem zur Durchführung eines solchen Verfahrens.

Aus dem Stand der Technik sind Verfahren zur Helligkeitsregelung von Innenraum-Beleuchtungsmitteln, insbesondere Innenraumleuchten, nach dem Oberbegriff des Hauptanspruchs allgemein bekannt, insbesondere im Zusammenhang mit der Beleuchtungsregelung für Büros oder andere Arbeitsräume, bei welchen typischerweise an einem Deckenbereich (auch an einem oberen Wandbereich) des Innenraums vorgesehene elektrische Innenraum-Beleuchtungsmittel auf einen Beleuchtungsbereich, etwa einen Bodenbereich, einen Schreibtisch od.dgl. Arbeitsbereich, gerichtet sind.

Zu nennen ist beispielsweise die DE 10 2008 036992 A1, welche ein Helligkeitsregelsystem für einen Raum mit einem Leuchtmittel, einem Lichtfühler zum Erfassen einer Leuchtdichte in dem Raum und eine Lichtregeleinheit zum Ansteuern des Leuchtmittels umfasst. Das System sieht die Vorgabe zweier Werte vor, nämlich eines ersten Abgleichwertes bei Kunstlichtbeleuchtung und eines zweiten Abgleichwertes bei Tageslichtbeleuchtung. Sodann wird ein Sollwert ermittelt aus den beiden Abgleichwerten und der gemessenen Leuchtdichte. Zur Durchführung einer Regelung wird eine Leuchtdichte im Raum gemessen und mit dem Sollwert verglichen, wobei das Vergleichsergebnis einen Stellwert zur Nachstellung des Leuchtmittels liefert.

Helligkeit-Sensormittel, etwa in Form gängiger Lichtstärkesensoren, erfassen eine Licht- bzw. Beleuchtungsstärke im Beleuchtungsbereich der Innenraum-Beleuchtungsmittel und bewirken dann das Regeln der Innenraumbeleuchtung auf einen geeigneten, üblichen konstanten und vorgegebenen Beleuchtungssollwert als Helligkeits-Regelsollwert, in Abhängigkeit von einem Ausgangssignal der Sensormittel, die typischerweise einen Phototransistor oder vergleichbare lichtempfindliche Elemente aufweisen.

Derartige Verfahren und Systeme zur Beleuchtungsregelung in einem Innenraum sind in zahlreichen Varianten und Ausgestaltungen bekannt, wobei nicht nur Art, Anzahl und Anordnung der Innenraum-Beleuchtungsmittel in nahezu beliebigen Varianten existieren, vielmehr sind gleichermaßen die Sensormittel zum Erfassen einer Helligkeit im Beleuchtungsbereich in diversen Varianten bekannt, sowohl als zur Decken- oder Wandmontage vorgesehene und mit den Beleuchtungsmitteln verbundene oder aber getrennt von diesen ausgestaltete Einheiten, insbesondere auch etwa in Form von Sensoren, welche als Helligkeitsmesser unmittelbar auf oder im Beleuchtungsbereich platziert sind.

Sämtliche zum oberbegrifflichen Stand der Technik zählende Technologien sorgen bestimmungsgemäß dafür, dass der Beleuchtungsbereich der Beleuchtungsmittel durch Regelung deren Lichtleistung in etwa auf einem dem Helligkeits-Regelsollwert entsprechenden (konstanten) Lichtpegel gehalten wird, selbst wenn sich Umgebungsbedingungen, bezogen auf den Beleuchtungsbereich, ändern. So würde etwa durch die bekannte und gattungsgemäße Regelung der Helligkeit dann, wenn Tageslicht oder Sonneneinfall in den Innenraum für zusätzliches Licht im Beleuchtungsbereich sorgt, die Lichtleistung der Innenraum-Beleuchtungsmittel entsprechend abgesenkt werden, so dass eine von den Sensormitteln erfasste Helligkeit im Wesentlichen konstant gehalten wird.

In der Praxis, insbesondere im Zusammenhang mit dem gleichzeitigen Auftreten von künstlichem Licht - emittiert durch die Beleuchtungsmittel, welche etwa Glühlampen, Entladungsleuchtmittel oder LEDs aufweisen können - und durch Fenster oder andere Innenraumöffnungen einfallenden natürlichem Licht ist die bekannte und gattungsgemäße Vorgehensweise bei der Beleuchtungsregelung jedoch nicht immer befriedigend. Insbesondere wirken sich nämlich das künstliche Licht einerseits und das natürliche Licht andererseits verschieden auf die Lichterfassung und damit ein erzeugtes Sensorsignal der eingesetzten Helligkeitssensormittel aus: Einfallendes Tageslicht wird dabei, nicht zuletzt aufgrund eines bei Deckenmontage unvermeidbaren flacheren Einfallswinkels, vom Lichtsensor stärker bewertet als das durch die Innenraumbeleuchtungsmittel emittierte künstliche Licht. Durch diese Konstellation würde etwa, bei einem Ansteigen der Helligkeit des natürlichen Lichts (z.B. aufgrund stärkeren Sonnenlichteinfalls von außen, eine Bewölkung löst sich auf) eine gattungsgemäße Regelung die Lichtleistung des künstlichen Lichts (nämlich der Innenraum-Beleuchtungsmittel) absenken, um den ursprünglichen, etwa zum Zeitpunkt eines Einrichtens (Teach) eingestellten Helligkeits-Sollwert wieder zu erreichen. Aufgrund des beschriebenen Phänomens einer disproportionalen bzw. ungleichgewichtigen Berücksichtigung des natürlichen Lichts würde jedoch, aufgrund der beschriebenen Über-Detektion bzw. Über-Wahrnehmung des natürlichen Lichts, eine unangemessen starke Absenkung (Abregelung) des Kunstlichts der Innenraum-Beleuchtungsmittel erfolgen, so dass zwar das von den Helligkeits-Sensormitteln ausgegebene Sensorsignal (wieder) gleich ist, faktisch jedoch (und in der Praxis durchaus visuell von Bedienpersonen wahrnehmbar) eine zu geringe Beleuchtungsstärke bzw. Helligkeit herrscht.

Zwar ist es denkbar, etwa mittels eines Außensensors oder eines geeignet ausgerichteten und unmittelbar etwa am Fenster platzierten Sensors nur für natürliches Licht und dann durch eine nachfolgende Verknüpfung mit einem Innenraumsensor hier eine gewisse Kompensation herbeizuführen, dies führt jedoch zu komplexen und hardwareaufwändigen Steuerungen, in Verbindung mit der Notwendigkeit, auch Nichtlinearitäten zu berücksichtigen, was insbesondere einen Montage- bzw. Einrichtebetrieb bei der Leuchteninstallation aufwändig macht.

Aufgabe der vorliegenden Erfindung ist es daher, ein gattungsgemäßes Verfahren zur Helligkeitsregelung von Innenraum-Beleuchtungsmitteln, insbesondere für Innenraumsituationen, zu verbessern, bei welchen es zu einem variablen Auftreten von Beleuchtungs- und Helligkeitsbeiträgen einerseits der Innenraum-Beleuchtungsmittel, andererseits von etwa durch Türen, Fenster od.dgl. einfallendes natürliches Licht kommt. Dabei ist insbesondere sicherzustellen, dass unabhängig von einem (variierenden) Beitrag des natürlichen Lichts zur Gesamthelligkeit im Innenraum (bzw. in einem maßgeblichen Erfassungsbereich) ein objektiv gleichbleibender oder nahezu gleichbleibender Helligkeitspegel entsteht und insbesondere die Nachteile üblicher Helligkeitssensoren, Beiträge natürlichen Lichts unterschiedlich im Vergleich zu den Beleuchtungsmitteln zu gewichten, kompensiert werden kann.

Die Aufgabe wird durch das Verfahren zur Helligkeitsregelung nach dem Hauptanspruch gelöst; vorteilhafte Weiterbildungen der Erfindung sind in den Unteransprüchen beschrieben. Ferner wird die genannte Aufgabe gelöst durch ein Beleuchtungsregelsystem zur Durchführung des patentgemäßen Verfahrens mit weiteren abhängigen Systemansprüchen, welche für das erfindungsgemäße Verfahren eine erfindungsgemäße Systemumgebung schaffen. Die vorliegende Erfindung ist dabei insbesondere bevorzugt erfindungsgemäß einsetzbar in Büro-, Ausstellungs-, Operations- oder Montageumgebungen, jedoch ist die Erfindung weder auf diese konkreten Innenraumkonstellationen, noch auf eine derartige Verwendung beschränkt.

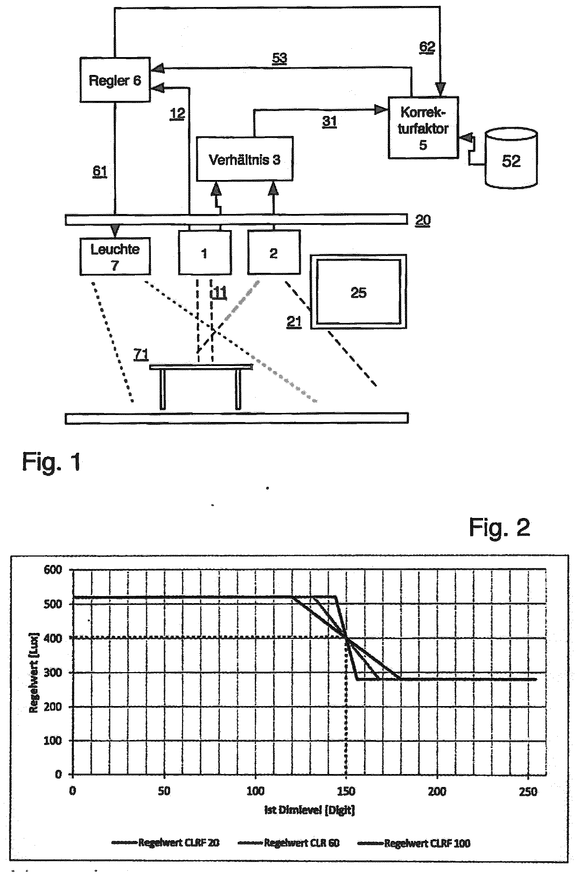

Auch steht die vorliegende Erfindung in unmittelbarem inhaltlichen Zusammenhang mit der deutschen Patentanmeldung 10 2015 122 630 der Anmelderin, wobei insbesondere das dort beschriebene Verfahren zur Beleuchtungsregelung bzw. das in Fig. 1 dieser Anmeldung gezeigte System durch die vorliegende Erfindung in vorteilhafter Weise weitergebildet werden kann, insbesondere dadurch, dass die in der genannten älteren Anmeldung gezeigte Anordnung aus ersten und zweiten Sensormitteln mit deren (voneinander abweichender) Ausrichtung der jeweiligen Erfassungsbereiche genutzt werden kann, um entsprechend der vorliegenden Erfindung den nachfolgend zu erläuternden Signifikanzfaktor auf einfache Weise erzeugen zu können.

Der Erfindung liegt zunächst die Erkenntnis zugrunde, dass eine Veränderung des helligkeitsbestimmenden Steuersignals für die Beleuchtungsmittel, also etwa das von den Regelmitteln an die Beleuchtungsmittel übertragende Steuersignal für die helligkeitsbestimmende Spannung oder einen helligkeitsbestimmenden Strom der Leuchtmittel, bei gleichen Helligkeitswerten (Detektionswerten) der Helligkeitssensormittel ein Indikator dafür ist, dass sich der Anteil natürlichen Lichts an der Gesamthelligkeit verändert haben muss. Entsprechend sieht die vorliegende Erfindung das Erzeugen eines Korrekturfaktors für den Helligkeits-Regelsollwert vor, welcher einerseits einen ursprünglichen, beim Einrichten (teach) erzeugten Speicherwert für das helligkeitsbestimmende Steuersignal, andererseits einen aktuellen Steuersignalwert, miteinander in Beziehung setzt und daraus einen Korrekturfaktor ableitet, welcher dann den Helligkeits-Regelsollwert geeignet kompensatorisch beeinflusst.

In erfindungsgemäß vorteilhafter Weise sieht daher die Erfindung vor, das helligkeitsbestimmende Steuersignal zunächst beim Vorgeben des Helligkeits-Regelsollwerts (z.B. während der Einrichtung mittels einer geeigneten Fernsteuerung od.dgl.) zu erfassen und als Speicherwert abzulegen, wobei dies besonders bevorzugt unmittelbar zum Zeitpunkt des Vorgebens oder innerhalb eines vorbestimmten Zeitintervalls vor oder nach dem Vorgeben erfolgt. Dies ist dann das Maß bzw. derjenige Wert, dessen Helligkeit auch unabhängig von Beiträgen natürlichen Lichts konstant bleiben soll.

Weiterhin wird dann im Rahmen der Erfindung zumindest zeitweise, weiter bevorzugt kontinuierlich, das helligkeitsbestimmende Steuersignal erfasst und bildet damit das aktuelle Steuersignal für die nachfolgende Erzeugung des Korrekturfaktors: Dieser basiert dann auf einer Differenz zwischen dem (ursprünglichen) Speicherwert und dem aktuellen Steuersignal, wobei, weiter bevorzugt, dieser Differenz dann auch noch Faktoren zugesetzt werden können bzw. eine untere bzw. obere Begrenzung im Hinblick auf Maximal- bzw. Minimalwerte zugeordnet werden kann. Erfindungsgemäß erfolgt dann die Regelung mittels der (ansonsten bekannten) Regelinfrastruktur nicht lediglich mit dem ursprünglich vorgegebenen Helligkeits-Regelsollwert, vielmehr wird dieser erfindungsgemäß um den Korrekturfaktor korrigiert, wobei hierfür der Sollwert weiter bevorzugt in einfach elektronisch umzusetzender Weise mit dem Korrekturfaktor oder einem daraus abgeleiteten Faktor multipliziert wird.

Dies führt dann dazu, dass der Regel-Sollwert für die Beleuchtungsmittel dynamisch angepasst wird, und zwar auf der Basis des aktuellen (bzw. ursprünglichen) Steuersignals für die Beleuchtungsmittel. Üblicherweise ist dabei die Anpassung des Regel-Sollwerts umso größer, desto größer die Abweichung des aktuellen Steuersignals (in der nachfolgenden Beschreibung des Ausführungsbeispiels auch als "Dimlevel" bezeichnet) von einem ursprünglichen, gespeicherten helligkeitsbestimmenden Steuersignal (Dimlevel beim Teach) ist.

In einer besonders bevorzugten Weiterbildung der Erfindung wird der erfindungsgemäße Korrekturfaktor durch einen Signifikanzfaktor beeinflusst (dieser wird dem Korrekturfaktor, etwa durch Multiplikation, zugeordnet), wobei dieser Signifikanzfaktor unmittelbar einen Kunstlichtanteil wiedergeben bzw. repräsentieren kann. Dies geschieht erfindungsgemäß weiterbildend dadurch, dass die Innenraumhelligkeit mit ersten und mit zweiten Helligkeitssensormitteln gemessen wird, die gemeinsam dann die erfindungsgemäßen Helligkeitssensormittel ausbilden. Erfindungsgemäß weiterbildend weisen dabei die ersten Helligkeitssensormittel (üblicherweise eine erste Sensoreinheit) relativ zu den zweiten Helligkeitssensormitteln (üblicherweise eine davon getrennte zweite Sensoreinheit) einen schmaleren, engeren und/oder fokussierteren Erfassungsbereich auf, wobei im Rahmen einer Umsetzung des erfindungsgemäßen Verfahrens in einem System diese ersten Sensormittel so ausgerichtet sind, dass der Erfassungsbereich in den von den Innenraum-Beleuchtungsmitteln beleuchteten Beleuchtungsbereich reicht bzw. in diesem liegt. Dagegen sind die zweiten Helligkeitssensormittel so ausgebildet bzw. ausgerichtet, dass diese zumindest bereichsweise außerhalb dieses Beleuchtungsbereichs Licht erfassen, wobei weiter bevorzugt ein besonders weiter und unfokussierter Erfassungsbereich durch die Diffusormittel erreicht wird, wie sie etwa in Form von gängigen mattierten Diffusorelementen bekannt sind. Die Ausgangssignale (Messsignale) der ersten bzw. zweiten Helligkeitssensormittel werden dann erfindungsgemäß weiterbildend als Quotient festgestellt und der Signifikanzfaktor bzw. dann im Weiteren auch der Korrekturfaktor damit von diesem Quotienten beeinflusst.

Entsprechend erfindungsgemäß ersetzt ein Beleuchtungsregelsystem dieses Verfahren um, wobei üblicherweise eine Mikroprozessor- oder Mikrocontrollereinheit die erfindungsgemäßen Regelmittel, die erfindungsgemäßen Korrekturfaktorerzeugungsmittel sowie auch weiterbildungsgemäß die erfindungsgemäßen Signifikanzfaktormittel realisiert und dann dieser Einheit geeignete Speicher- und Sensormittel zugeordnet sind, so dass mit gängiger Hardware eine Ablaufumgebung für das vorliegende erfindungsgemäße Verfahren geschaffen und in geeignete Beleuchtungskörper, Leuchtengehäuse und dgl. integriert werden kann, alternativ jedoch auch gesondert von diesen vorgesehen sein kann, etwa in Form zentralisierter Beleuchtungs-Steuereinheiten.

Weitere Vorteile, Merkmale und Einzelheiten der Erfindung ergeben sich aus der Beschreibung bevorzugter Ausführungsbeispiele sowie anhand der Figuren; diese zeigen in:

Fig. 1:   eine schematische Blockdarstellung mit wesentlichen Funktionskomponenten zum Verdeutlichen des erfindungsgemäßen Beleuchtungsregelungssystems zum Durchführen des Verfahrens gemäß einem ersten bevorzugten Ausführungsbeispiel und

Fig. 2:   eine schematische Darstellung zur Erläuterung der dynamischen Regelanpassung im Rahmen des vorbeschriebenen Ausführungsbeispiels.

Wie im Ausführungsbeispiel der Fig. 1 schematisch gezeigt, sind Innenraum-Beleuchtungsmittel (Leuchte) 7 geeignet an einem Deckenbereich 20 eines Innenraums vorgesehen. Die Innenraum-Beleuchtungsmittel 7 spannen im aktivierten Zustand einen Beleuchtungsbereich 71 auf, in welchem sich etwa ein anhand des schematisch gezeigten Tisches zu beleuchtender Arbeitsbereich befindet. Dieser Arbeitsbereich ist auf einer konstanten Helligkeit zu halten.

An der Decke 20 sind ferner Sensormittel in Form einer ersten Sensoreinheit 1 (mit einem ersten, schmalen und auf den Beleuchtungsbereich 71 gerichteten Sensorerfassungsbereich 11) sowie zweite Sensormittel 2 vorgesehen, welche einen demgegenüber weiten Erfassungsbereich 21 aufweisen, welcher zwar einerseits auch in den Beleuchtungsbereich 71 hineinreicht, andererseits jedoch auch Helligkeitsbereiche außerhalb dieses Beleuchtungsbereichs erfasst. Dieses schließt auch einen Helligkeitsbeitrag des schematisch gezeigten Fensters 25 für den Innenraum ein, durch welches (von Tageszeit, Umgebung und dgl. Umständen abhängig) in der Helligkeit veränderliches natürliches Licht einfällt und zusammen mit dem Lichtbeitrag der Innenraum-Beleuchtungsmittel 7 für eine Gesamthelligkeit sorgt.

Im Kern der vorliegenden Erfindung stehen Korrekturfaktur-Erzeugungsmittel 5 (geeignet etwa durch einen entsprechend programmierten Mikrocontroller einer nicht gezeigten elektronischen Steuereinheit realisiert), welche prinzipiell einen Korrekturfaktur erzeugen, welcher sich wie folgt bestimmt:

$$Korrekturfaktor = \frac{Dimlevel\ bei\ Teach\ -\ Dimlevel\ aktuell}{CLRFactor}$$

Dabei bedeutet die Größe "Dimlevel bei Teach" den in einer Speichereinheit 52 gespeicherten (ursprünglichen) helligkeitsbestimmenden Steuersignalwert 61, welcher von der Regeleinheit (Regelmittel) 6 ausgegeben wird und den Leuchtmittel 7 helligkeitsbestimmend anliegt. Typische Ausprägungen dieses "Dimlevel bei Teach" sind entweder eine Steuerspannung oder ein Steuerstrom, abhängig vom verwendeten Leuchtmittel, alternativ auch etwa geeignet digitale Vorgabewerte für nicht gezeigte, den Beleuchtungsmitteln 7 vorzuschaltende Vorschaltgeräte. Die Größe "Dimlevel aktuell" entspricht dem aktuell erfassten Steuersignal, welches, in der Fig. 1 durch das Bezugszeichen 62 bezeichnet, den Korrekturfakturerzeugungsmitteln 5 unmittelbar anliegt und zusammen mit dem Inhalt der Speichereinheit 52 in der beschriebenen Form zum Korrekturfaktor verrechnet wird. Dieser enthält noch einen variabel vorzugebenden Faktor CLRFactor, welcher das Maß der Anpassung durch den Korrekturfaktur beeinflusst, wie dies in Fig. 2 gezeigt ist: An einem schematischen Beispiel wird dieser Einfluss verschiedener Werte für die Größe CLRFactor auf das Korrekturverhalten gezeigt, bei einem exemplarischen Wert der zum Zeitpunkt der Einrichtung (Teach) herrschenden Helligkeit von 400 Lux (Teachhelligkeit) herrscht ein Dimlevel (Dimlevel bei Teach) von 150 Einheiten (Digit). Die Grafik der Fig. 2 zeigt entsprechend der vorgenannten Formel für den Korrekturwert den Einfluss des CLRFactor von 20, 60 bzw. 100 deutlich wird, dass bei kleinerem Korrekturfaktor CLRFactor eine starke Korrektur bzw. ein stärkerer Eingriff in die Regelung stattfindet. Damit würde eine Einrichtperson (etwa ein die Erstinstallation vornehmender Techniker) bei dem Einrichtungsvorgang (Teach) einen Korrekturfaktor entsprechend einem üblicherweise zu erwartenden Einfluss natürlichen Lichts auf die Sensormittel wählen; je mehr natürliches Licht auf den Messbereich der Sensoreinheit fällt, desto kleiner sollte der Korrekturfaktor CLRFactor gewählt werden.

Dies würde dann dazu führen, dass ein neuer Helligkeits-Regelsollwert (53 in der Fig. 1) sich wie folgt bestimmt:

$$\text{Neuer Helligkeits-Regelsollwert} = \text{Teachhelligkeit} * (1 + \text{Korrekturfaktor}).$$

Allerdings ermöglicht das Ausführungsbeispiel der Fig. 1 eine weitergehende, komfortablere Berücksichtigung des Korrekturfaktors CLRFactor, im Rahmen der Erfindung auch als "Signifikanzfaktor" bezeichnet. Das Ausführungsbeispiel der Fig. 1 sieht nämlich durch Vorsehen zweier in der beschriebenen Weise unterschiedlich ausgerichteter einzelner Sensormittel vor, dass deren (unterschiedliche) Sensorbeiträge bereits verwendet werden können, um den Signifikanzfaktor automatisiert zu bestimmen.

So hat es sich im Rahmen der Erfindung, abgebildet im Ausführungsbeispiel der Fig. 1, als günstig und bevorzugt herausgestellt, die Eigenschaft auszunutzen, dass üblicherweise der weit bzw. diffus erfassende Helligkeitssensor 2 stärker von einfallendem natürlichem Licht beeinflusst wird als der fokussierte, gerichtete Helligkeitssensor 1. Dieser wird hingegen, vgl. die Ausrichtung und Positionierung in Fig. 1, stärker von der Beleuchtungsquelle (Innenraum-Beleuchtungsmittel) 7 beeinflusst.

Die oben dargelegte erfindungsgemäße Erkenntnis, dass ein Verhältnissignal der mit den Sensoren 1, 2 ermöglichten gerichteten (1) bzw. diffusen (2) Messung einen Anteil aktuell einfallenden natürlichen Lichts repräsentiert, wird daher im Rahmen des gezeigten Ausführungsbeispiel benutzt, um den CLRFactor zu beeinflussen bzw. zu ersetzen. Danach würde nämlich die Quotientbildung des Helligkeitssignals des Sensors 1 (Helligkeit$_{gerichtet}$) bezogen auf das Ausgangssignal des Sensors 2 (Helligkeit$_{diffus}$), gebildet durch Quotientenmittel 3, diesen Vorgang (zumindest teilweise) automatisieren. Der oben allgemein dargelegte Korrekturfaktor würde dann gemäß Fig. 1 gebildet wie folgt:

$$Korrekturfaktor = \frac{Dimlevel\ bei\ Teach\ -\ Dimlevel\ aktuell}{CLRFactor * \dfrac{Helligkeit_{gerichtet}}{Helligkeit_{diffus}}}$$

Dies führt dazu, dass bei Anstieg des Beitrags natürlichen Lichts automatisch der CLRFactor verringert wird.

Die vorliegende Erfindung ist nicht auf das gezeigte Ausführungsbeispiel oder die konkrete Umsetzung der Korrektur anhand der vorbeschriebenen funktionalen Zusammenhänge beschränkt. Vielmehr lässt sich sowohl eine Verwendung oder Ausgestaltung des Systems bzw. des Verfahrens für nahezu beliebige (Innenraum-)Einsatzumgebungen auffinden, ebenso wie weder die Anordnung, Ausgestaltung oder Anzahl von Sensoren oder Leuchtmitteln prinzipiell festgelegt ist. Auch ist zwar eine Verwendung der Erfindung im Rahmen von Büro-, Betriebs-, Fertigungs-, Operations-, Lehr- oder Präsentationsbereichen bevorzugt, jedoch sind auch dies lediglich bevorzugte Anwendungsbereiche für das erfindungsgemäße verbesserte Konstanthalten tatsächlicher Helligkeit im Mix zwischen künstlicher und natürlicher Beleuchtung.

## Patentansprüche

1. Verfahren zur Helligkeitsregelung von Innenraum-Beleuchtungsmitteln (7), mit den Schritten:

- Vorgeben und Speichern (52) eines zunächst vorgegebenen Helligkeits-Regelsollwerts für die Beleuchtungsmittel (7),
- Erfassen einer Innenraumhelligkeit durch Helligkeitssensormittel (1),
- Durchführen einer Regelung der Innenraum-Beleuchtungsmittel (7) unter Nutzung eines Helligkeits-Regelsollwerts (53) und eines erfassten aktuellen Erfassungswertes (12) der Innenraumhelligkeit unter Anpassung eines helligkeitsbestimmenden Steuersignalwerts (61) für die Innenraum-Beleuchtungsmittel (7), insbesondere einer Steuerspannung und/oder eines Steuerstroms, wobei in diesem Schritt der zunächst vorgegebene Helligkeits-Regelsollwert als der Helligkeits-Regelsollwert (53) benutzt ist,

**gekennzeichnet durch** die Schritte:

- Erfassen und Speichern (51) des helligkeitsbestimmenden Steuersignals (61) als Speicherwert beim Vorgeben des zunächst vorgegebenen Helligkeits-Regelsollwertes , insbesondere zum Zeitpunkt des Vorgebens oder innerhalb eines vorbestimmten Zeitintervalls vor/nach dem Vorgeben,
- zumindest zeitweises Erfassen des helligkeitsbestimmenden Steuersignalwerts (61) als aktueller Steuersignalwert (62) während des Erfassens der Innenraumhelligkeit und/oder während der Regelung ,
- Erzeugen eines Korrekturfaktors für den Helligkeits-Regelsollwert , (53) auf der Basis einer Differenz zwischen dem Speicherwert und dem aktuellen Steuersignalwert (62) und
- Durchführen der Regelung mit einem um den Korrekturfaktor korrigierten, insbesondere mit dem Korrekturfaktor oder einem daraus abgeleiteten Faktor multiplizierten, neuen Helligkeits-Regelsollwert (53).

2. Verfahren nach Anspruch 1, wobei dem Korrekturfaktor für das Durchführen der Regelung ein Signifikanzfaktor zugeordnet wird, der insbesondere einen Kunstlichtanteil oder einen natürlichen Lichtanteil an der Innenraumhelligkeit

und/oder einen baulichen oder Raumparameter des den Innenraum-Beleuchtungsmitteln zugeordneten Innenraums abbildet, berücksichtigt und/oder von einer dieser Größen beeinflusst wird.

3. Verfahren nach Anspruch 2, mit den weiteren Schritten

- Messen der Innenraumhelligkeit mit ersten (1) und mit zweiten (2), insbesondere davon verschiedenen Helligkeitssensormitteln, wobei die ersten Helligkeitssensormittel (1) relativ zu den zweiten Helligkeitssensormitteln (2) einen schmaleren und/oder engeren und/oder fokussierteren und auf einen von den Innenraum-Beleuchtungsmitteln (7) beleuchteten Beleuchtungsbereich (71) gerichteten Erfassungsbereich (11) aufweisen und die zweiten Helligkeitssensormittel einen zumindest bereichsweise außerhalb des Beleuchtungsbereichs (71) liegenden Erfassungsbereich (21) aufweisen und insbesondere mit Diffusormitteln versehen sind,
- Bilden eines Quotienten auf der Basis von Messsignalen der ersten und der zweiten Helligkeitssensormittel (1, 2), und
- Realisieren oder Verknüpfen, insbesondere Multiplizieren, des Signifikanzfaktors mit dem Quotienten für das Durchführen der Regelung.

4. Beleuchtungsregelsystem zum Durchführen des Verfahrens nach einem der Ansprüche 1 bis 3, **gekennzeichnet durch**

- Mittel zum Vorgeben und Speichern des zunächst vorgegebenen Helligkeits-Regelsollwerts (53) für die Beleuchtungsmittel, insbesondere unter Nutzung von weiter bevorzugt drahtlosen Fernsteuermitteln,
- die Helligkeitssensormittel (1, 2),
- Regelmitteln (6) zum Durchführen der Regelung,
- Erfassungs- und Speichermittel für den helligkeitsbestimmenden Steuersignalwert (61) und mit den Regelmitteln zusammenwirkende Korrekturfaktorerzeugungsmittel (5) zum Erzeugen des Korrekturfaktors.

5. Beleuchtungsregelsystem nach Anspruch 4, ferner umfassend den Korrekturfaktorerzeugungsmitteln (5) zugeordnete Signifikanzfaktormittel (3), die zum Zuordnen eines Signifikanzfaktors zu dem Korrekturfaktor ausgebildet sind, wobei der Signifikanzfaktor insbesondere einen Kunstlichtanteil oder einen natürlichen Lichtanteil an der Innenraumhelligkeit abbildet, berücksichtigt und/oder von einer diesen Größen beeinflusst ist.

6. Beleuchtungsregelsystem nach Anspruch 5, wobei den Signifikanzfaktormitteln (3) erste (1) und zweite (2) Helligkeitssensormittel zugeordnet sind, wobei die ersten Helligkeitssensormittel relativ zu den zweiten Helligkeitssensormitteln einen schmaleren und/oder engeren und/oder fokussierteren und auf einen von den Innenraumbeleuchtungsmitteln beleuchteten Beleuchtungsbereich (71) gerichteten Erfassungsbereich (11) aufweisen und die zweiten Helligkeitssensormittel einen zumindest bereichsweise außerhalb des Beleuchtungsbereichs (71) liegenden Erfassungsbereich (21) aufweisen und bevorzugt mit Diffusormitteln versehen sind, wobei die Signifikanzfaktormittel (3) zum Bilden eines Quotienten auf der Basis von Messsignalen der ersten und der zweiten Helligkeitssensormittel und zum Verknüpfen oder Realisieren des Signifikanzfaktors mit dem Quotienten ausgebildet sind.

7. Verwendung des Beleuchtungssystems nach einem der Ansprüche 4 bis 6 für einen Beleuchtungsbereich in einem Büro, einem Operationsraum, einem Montageraum, einem Schulungsraum oder einem Präsentationsraum.

**Claims**

1. Method for the brightness regulation of interior lighting media (7), with the steps:

   - Determining and storing (52) of an initially specified brightness regulating reference value for the lighting media (7),
   - detection of an interior brightness by brightness sensor media (1),
   - carrying out a regulation of the interior lighting media (7) by making use of a brightness regulation reference value (53) and a detected current detection value (12) of the interior brightness by adjustment of a control signal value (61) determining the brightness for the interior lighting media (7), in particular of a control value and/or a control current, wherein in this step the initially specified brightness regulating reference value is used as the brightness regulating reference value (53),

   **characterized by** the steps:

   - Detecting and storing (51) of a control signal value (61) determining the brightness, as a storage value, with the predetermining of the initially specified brightness regulating reference value, in particular at the time of specifying or within a predetermined interval of time before/after the specifying,
   - at least partial detecting of the signal value (61), determining the brightness as a current control signal value (62), during the detection of the interior brightness and/or during the regulating,
   - generating of a correction factor for the brightness regulation reference value (53) on the basis of a difference between the stored value and the current control signal value (62) and
   - carrying out the regulating with a new brightness regulating reference value (53) corrected by a correction factor, in particular multiplied by the correction factor or by a factor derived from it

2. Method according to claim 1, wherein a significance factor is assigned to the correction factor for carrying out the regulating, which in particular forms and takes account of an artificial light portion or a natural light portion of the interior brightness and/or a structural or spatial parameter of the interior assigned to the interior lighting media, and/or is influenced by these values.

3. Method according to claim 2, with the steps:

   - Measuring the interior brightness with first (1) and with second (2) brightness sensor means, in particular different from one another, wherein the first brightness sensor means (1), relative to the second brightness sensor means (2), exhibit a more constricted and/or narrower and/or focussed detection range (11), directed onto a lighting region (71) lit by the interior lighting media (7), and the second brightness sensor means exhibit a detection range (21) which at least in some areas lies outside the lighting region (71), and in particular are provided with diffusor means,
   - forming of a quotient on the basis of measurement signals from the first and second brightness sensor means (1, 2), and
   - realising or linking, in particular multiplying, of the significance factor with the quotient for carrying out the regulating.

4. Lighting regulating system for carrying out the method according to any one of claims 1 to 3, **characterized by**

   - Means for determining and storing of the brightness regulating reference value (53) for the lighting means, in particular with the use of further preferred wireless remote control means,
   - the brightness sensor means (1, 2),
   - regulating means (6) for carrying out the regulating,
   - detecting and storing means for the control signal value (61) which determines the brightness, and with correction factor generating means (5), interacting with the regulating means, for generating the correction factor.

5. Lighting regulating system according to claim 4, further comprising significance factor means (3), assigned to the correction factor generating means (5), which are configured to assign a significance factors to the correction factor, wherein the significance factor in particular forms or takes account of an artificial light portion or a natural light portion of the interior brightness, and/or is influenced by these values.

6. Lighting regulating system according to claim 5, wherein first (1) and second (2) brightness sensor means are

EP 3 244 703 B1

assigned to the significance factor means (3), wherein the first brightness sensor means, relative to the second brightness sensor means, exhibit a more constricted and/or narrower and/or focussed detection range (11), directed onto a lighting region (71) lit by the interior lighting media, and the second brightness sensor means exhibit a detection range (21) which at least in some areas lies outside the lighting region (71), and preferably are provided with diffusor means, wherein the significance factor means (3) are configured to form a quotient on the basis of measurement signals from the first and the brightness sensor means and for linking or realising the significance factor with the quotient.

7. Use of the lighting system according to any one of claims 4 to 6 for a lighting region in an office, an operating theatre, an assembly workshop, a training room, or a presentation room.


**Revendications**

1. Procédé pour le réglage de luminosité de moyens d'éclairage d'espace intérieur (7), avec les étapes :

- de prédéfinition et stockage (52) d'une valeur théorique de réglage de luminosité, prédéfinie tout d'abord, pour les moyens d'éclairage (7),
- de détection d'une luminosité d'espace intérieur par des moyens capteurs de luminosité (1),
- d'exécution d'un réglage des moyens d'éclairage d'espace intérieur (7) en utilisant une valeur théorique de réglage de luminosité (53) et une valeur de détection courante détectée (12) de la luminosité d'espace intérieur en adaptant une valeur de signal de commande (61) déterminant la luminosité pour les moyens d'éclairage d'espace intérieur (7), en particulier une tension de commande et/ou un courant de commande, dans lequel dans cette étape la valeur théorique de réglage de luminosité prédéfinie tout d'abord est utilisée comme valeur théorique de réglage de luminosité (53),

**caractérisé par** les étapes :

- de détection et de stockage (51) du signal de commande déterminant la luminosité (61) comme valeur stockée, lors de la prédéfinition de la valeur théorique de réglage de luminosité prédéfinie tout d'abord, en particulier au moment de la prédéfinition ou à l'intérieur d'un intervalle de temps prédéterminé avant/après la prédéfinition,
- de détection au moins temporaire de la valeur de signal de commande déterminant la luminosité (61) comme valeur de signal de commande courante (62) pendant la détection de la luminosité d'espace intérieur et/ou pendant le réglage,
- de production d'un facteur de correction pour la valeur théorique de réglage de luminosité (53) sur la base d'une différence entre la valeur stockée et la valeur de signal de commande courante (62), et
- d'exécution du réglage avec une nouvelle valeur théorique de réglage de luminosité (53) corrigée suivant le facteur de correction, en particulier multipliée par le facteur de correction ou un facteur dérivé de celui-ci.

2. Procédé selon la revendication 1, dans lequel est associé au facteur de correction pour l'exécution du réglage un facteur de signification qui représente et/ou prend en considération en particulier une part de lumière artificielle ou une part de lumière naturelle de la luminosité d'espace intérieur et/ou un paramètre de construction ou d'espace de l'espace intérieur associé aux moyens d'éclairage d'espace intérieur et/ou est influencé par l'une de ces grandeurs.

3. Procédé selon la revendication 2, avec les étapes supplémentaires

- de mesure de la luminosité d'espace intérieur avec des premiers moyens capteurs de luminosité (1) et avec des deuxièmes moyens capteurs de luminosité (2) en particulier différents de ceux-ci,
dans lequel les premiers moyens capteurs de luminosité (1) présentent par rapport aux deuxièmes moyens capteurs de luminosité (2) une zone de détection (11) plus étroite et/ou plus retreinte et/ou plus focalisée et dirigée vers une zone d'éclairage (71) éclairée par les moyens d'éclairage d'espace intérieur (7) et les deuxièmes moyens capteurs de luminosité présentent une zone de détection (21) située au moins par zones en dehors de la zone d'éclairage (71) et sont pourvus en particulier de moyens diffuseurs,
- de formation d'un quotient sur la base de signaux de mesure des premiers et deuxièmes moyens capteurs de luminosité (1, 2), et
- de réalisation ou de combinaison, en particulier de multiplication, du facteur de signification avec le quotient pour la réalisation du réglage.

8

**4.** Système de réglage d'éclairage pour réaliser le procédé selon l'une des revendications 1 à 3, **caractérisé par**

- des moyens pour prédéfinir et stocker la valeur théorique de réglage de luminosité (53) prédéfinie tout d'abord pour les moyens d'éclairage, en particulier en utilisant des moyens de télécommande de préférence sans fil,
- les moyens capteurs de luminosité (1, 2),
- des moyens de réglage (6) pour exécuter le réglage,
- des moyens de détection et de stockage pour la valeur de signal de commande déterminant la luminosité (61) et des moyens de production de facteur de correction (6) coopérant avec les moyens de réglage, pour produire le facteur de correction.

**5.** Système de réglage d'éclairage selon la revendication 4, comprenant également des moyens de facteur de signification (3) associés aux moyens de production de facteur de correction (5) qui sont formés pour associer un facteur de signification au facteur de correction, dans lequel le facteur de signification représente, prend en considération en particulier une part de lumière artificielle ou une part de lumière naturelle de la luminosité d'espace intérieur et/ou est influencé par l'une de ces grandeurs.

**6.** Système de réglage d'éclairage selon la revendication 5, dans lequel des premiers (1) et deuxièmes (2) moyens capteurs de luminosité sont associés aux moyens de facteur de signification (3), dans lequel les premiers moyens capteurs de luminosité présentent par rapport aux deuxièmes moyens capteurs de luminosité une zone de détection (11) plus étroite et/ou plus retreinte et/ou plus focalisée et dirigée vers une zone d'éclairage (71) éclairée par les moyens d'éclairage d'espace intérieur, et les deuxièmes moyens capteurs de luminosité présentent une zone de détection (21) située au moins par zones en dehors de la zone d'éclairage (71) et sont pourvus de préférence de moyens diffuseurs, dans lequel les moyens de facteur de signification (3) sont formés pour former un quotient sur la base de signaux de mesure des premiers et deuxièmes moyens capteurs de luminosité et pour combiner ou réaliser le facteur de signification avec le quotient.

**7.** Utilisation du système d'éclairage selon l'une des revendications 4 à 6 pour une zone d'éclairage dans un bureau, une salle d'opération, une salle de montage, une salle de formation ou une salle de présentation.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008036992 A1
- DE 102015122630